# EUROPÄISCHE PATENTSCHRIFT

(11) **EP 2 052 117 B1**
(45) Veröffentlichungstag und Bekanntmachung des Hinweises auf die Patenterteilung: **18.11.2009**
(21) Anmeldenummer: 07785672.2
(22) Anmeldetag: 21.07.2007
(51) Int. Cl.: E04F 13/14, E04C 2/26, B23B 9/04, B32B 17/06

(54) **STEIN-GLAS-ELEMENT MIT KAPILLARSCHNITT**
STONE-GLASS ELEMENT WITH CAPILLARY CUT
ÉLÉMENT EN PIERRE-VERRE AVEC FENTE CAPILLAIRE

(30) Priorität: 07.08.2006 DE 202006012039 U
(43) Veröffentlichungstag der Anmeldung: 29.04.2009
(73) Patentinhaber: IIstone GmbH, 44879 Bochum (DE)
(72) Erfinder: BLANKE-BOHNE, Johannes, 44879 Bochum (DE); MARQUARDT, Reinhold, 45884 Gelsenkirchen (DE)
(74) Vertreter: Kohler Schmid Möbus
(86) Internationale Anmeldenummer: PCT/DE2007/001307
(87) Internationale Veröffentlichungsnummer: WO 2008/017287

(56) Entgegenhaltungen:
- EP-B- 0 799 949
- WO-A-2006/079310
- DE-A1- 3 401 891
- DE-U1- 20 312 353

## Beschreibung

Die Erfindung betrifft ein Stein-Glas-Element mit mindestens einer Steinplatte und einer Tragplatte, die mindestens eine Glasscheibe umfasst, welche mittels einer transparenten oder opaken Gießharzschicht großflächig mit der Steinplatte verbunden ist, wobei die der Tragplatte gegenüberliegende Oberfläche der Steinplatte mit einer Feuchtigkeit abweisenden Abdeckschicht und/oder einer Abdeckplatte versehen ist.

Ein derartiges Stein-Glas-Element ist aus EP 0 799 949 B1 bekannt. Speziell wird hier auch ein Stein-Glas-Element mit symmetrischem Aufbau Glas / Stein / Glas vorgeschlagen. Solche Elemente werden insbesondere mit Natursteinplatten seit 1996 hergestellt und sowohl im Kalt- wie auch Warmbereich eingesetzt. Dabei kann die Steinplatte auch aus verschiedenen Steinplattenelementen zusammengesetzt worden sein.

Besonderes Kennzeichen ist hier die nahezu vollständige Versiegelung der großflächigen Natursteinplatten. Jedoch sind die Schnittränder der Elemente in der Regel offen und zugänglich für Feuchtigkeiten, wobei die Kapillarwirkung der Natursteine und deren Wasseraufnahmefähigkeit eine optische Änderung (Verdunklung) auslösen kann. Ein solcher Glas-Stein-Verbund kann wegen seiner ungeschützten Ränder nicht der freien Witterung ausgesetzt werden. Wird ein Naturstein durch künstlerische Aktivitäten (hochwertige Malerei oder Grafik) weiter veredelt, steht der Wunsch dieses Element frei in der Witterung aufstellen zu können sicher an erster Stelle. Auch hier sind Maßnahmen zum Schutz des Elementes und besonders der Seitenränder notwendig.

Eine komplette dichte Rundum-Versiegelung aller Ränder kann jedoch bei starker Sonneneinstrahlung und hohen Temperaturen auch nicht uneingeschränkt empfohlen werden, weil sonst ein im Inneren des Verbundes entstehender Staudruck nicht automatisch ausgeglichen werden könnte.
Ausgleichsmöglichkeiten müssen deshalb vorgesehen werden.

Die in EP 0 799 949 B1 vorgeschlagenen Gießharze sind nur in Verbindung mit den dort angegebenen notwendigerweise einzumischenden, jeweils auf die Steinsorte abgestimmten Haftvermittlern in der Lage eine minimale Feuchtigkeitsaufnahme ohne weitere Folgeschäden am Verbund zu regulieren. Wird jedoch irgendein beliebiges im Handel erhältliches Gießharz, wie z.B. im Glas / Glas Verbund verwendet oder gar zusätzlich noch mit äußerst hydrophilen Natursteinen wie Alabaster kombiniert, ist ein Stein-Glas-Verbund extrem gefährdet. Eine zur Zeit noch installierte - von der Fa. Flabeg Steinglas GmbH, Recklinghausen, heute unter dem Namen NGV GmbH, Recklinghausen firmierend, gefertigte - aufwendige Fassade für die LZB Chemnitz muss wegen erheblicher Delaminationen und optischen Veränderungen, die noch vor der Abnahme auftraten, komplett ausgetauscht werden. Feuchtigkeitseinfluss hat hier sowohl den Verbund zerstört, wie auch den Stein zersetzt.

Probleme sind immer dann zu erwarten, wenn der Stein beidseitig mit wasserdichten Stoffen (Platten aus Glas, Stein und Metall, sowie Lacke usw.) verbunden bzw. versiegelt wird. Die meist dünne Steinplatte mit einer Dicke von weniger als 1 cm entfaltet dadurch eine erhebliche Kapillarwirkung. Einmal aufgestiegenes Wasser - durchaus bis zu 30 cm Höhe - verlässt den Stein nur sehr langsam wieder über die verbliebenen offenen sehr kleinen Schnittflächen.

Aufgabe der Erfindung ist es daher, mit einfachen Mitteln bei einem Stein-Glas-Element der eingangs genannten Art eine Feuchtigkeitsdiffusion in das Innere des Steins zu verhindern, damit derartige gravierende Folgeschäden vermieden werden können. Dabei soll eine optische bzw. ästhetische Beeinträchtigung des Elements möglichst minimal sein und der technische Aufwand soll keine erheblichen Kostensteigerungen verursachen. Der rahmenlose Fassadenbau soll nach wie vor möglich sein.

Diese Aufgabe wird erfindungsgemäß auf überraschend einfache, aber sehr wirkungsvolle Weise dadurch gelöst, dass die Steinplatte parallel zu mindestens einer Seitenkante einen Kapillarschnitt aufweist, der mit einem Dichtstoff ausgefüllt ist, welcher eine Feuchtigkeitsdiffusion in Richtung auf das Innere der Steinplatte verhindert.

Die Kapillaren werden nach dem Verbund von Träger- und Steinplatte in möglichst kurzem Abstand vom Rand durch einen Schnitt abgetrennt. Transparente bzw. transluzente und natursteinverträgliche Dichtstoffe sind am Markt verfügbar. Die chemische und optische Verträglichkeit mit dem betroffenen Gießharz und ebenso mit dem verwendeten Stein muss dabei gewährleistet sein.

Im Standardfall wird der Kapillarschnitt senkrecht zur Oberfläche der Steinplatte ausgeführt. Dies kann mit einem einfachen Sägeschnitt erfolgen. Ist das Element für eine Rahmenmontage vorgesehen, kann diese Isoliermaßnahme ausreichend sein um die Diffusionen zu verhindern. Der durchaus sichtbare Kapillarschnitt in der Breite eines Sägeblattes kann im Montagerahmen "versteckt" werden.

Um den sichtbaren Kapillarschnitt möglichst dünn zu halten, kann man zunächst möglichst dünne Sägeblätter mit geringem Durchmesser verwenden. Aufwendigere Möglichkeiten bestehen durch den Einsatz von Erodierverfahren.

Weiters wird vorgeschlagen, um die sichtbare Trennlinie möglichst dünn zu halten, den Kapillarschnitt schräg zur Oberfläche der Steinplatte auszuführen. Vorteilhaft ist dabei, dass das Steinmaterial bei Verwendung eines transparenten Klebers sichtbar bleibt.

Wenn eine Diffusion vollständig unterbunden werden soll, wird die Steinplatte vom Kapillarschnitt vollständig durchtrennt. Nachteilig ist in solchen Fällen, dass eine sichtbare Trennlinie entsteht.

Will man jedoch ein diffusionssperrendes Profil z.B. aus Metall einsetzen, kann man dieses Profil mit einer sehr schmalen Stoßfuge vor dem ersten Verbund an der Natursteinkante mit einem Dichtstoff anbringen. Das Profil kann dann auch, nach dem Verbund, - bündig mit der Trag- und Abdeckplatte - den fertigen Elementrand bilden.

Will man der Steinplatte noch Gelegenheit zum Druckausgleich geben, kann man auch poröse Materialien oder einseitig zur Steinseite offene Hohlprofile direkt an die Kante der Steinplatte anbringen und den Kapillarschnitt daran anschließen lassen.

Soll für den normalen Fall eines Kapillarschnittes keine Trennlinie entstehen, wird alternativ in solchen Fällen vorgeschlagen, dass auf mindestens einer der beiden gegenüberliegenden Oberflächen der Steinplatte ein die Steinplatte nicht vollständig durchtrennender Kapillarschnitt in Form einer Profilnut vorgesehen wird. Dabei kann man das am Boden jeder Profilnut stehen gebliebene restliche Steinmaterial, das einen dünnen Steg (1 mm bis 3mm) bildet, durch eine Imprägnierung oder chemische Behandlung Feuchtigkeit abweisende Eigenschaften verleihen. Hierdurch bleibt optisch der Stein sichtbar, der Steinsteg ist jedoch nicht mehr diffusionsfähig. Die exakte maximal zulässige Dicke des Steges kann nur in Einzelversuchen mit der betroffenen Steinsorte ermittelt werden.

Der einfachste Kapillarschnitt wird mit einer Säge ausgeführt und hat daher einen rechteckigen Querschnitt. Nachteilig ist die sichtbare Breite des Schnittes. Werden jedoch von beiden Steinoberflächen versetzte Schnitte parallel zum Rand ausgeführt, kann eine dünne Trennlinie erzeugt werden. Die Tiefe beider Schnitte kann sowohl einen Steg, aber auch eine größere Trennquerschnittsfläche erzeugen. Der Versatz hat in jedem Fall optische Vorteile.

Durch Einsatz eines Fräsvorganges kann ein Kapillarschnitt auch V-förmig ausgeführt sein. Wird dieser von beiden Steinoberflächen aus vorgenommen, kann eine dünne Trennlinie erzeugt werden. Auch hier kann durchaus ein Steinsteg entstehen.

Ein etwa gleichwertiges Ergebnis wird mit runden Fräsköpfen für Kapillarschnitte erzielt. Die Kapillarschnitte sollen in den meisten Fällen mit einem möglichst geringen Abstand von der betroffenen Seitenkante der Steinplatte angesetzt werden. Wenn die Deckplatte im Gießharzverfahren aufgebracht wird, muss auf dem verbleibenden Rand noch ein Abstands- und Dichtband angebracht werden können, um das flüssige Gießharz danach einfüllen zu können.

Der so entstehende und nicht vermeidbare Streifen des Steines ist nach wie vor der Diffusion ausgesetzt. Die Wasseraufnahme ist hier aber sehr begrenzt und die Diffusionsfläche zur Abgabe des Wassers im Verhältnis zur Wassermenge sehr groß.

Die Wasseraufnahme kann weiter reduziert und gleichzeitig die offene Abgabefläche vergrößert werden, wenn man an der nach außen gerichteten Seitenfläche der Steinplatte, die an eine Seitenkante angrenzt, zu welcher der Kapillarschnitt parallel verläuft, ein parallel zu den beiden gegenüberliegenden Oberflächen der Steinplatte verlaufenden Schnitt anbringt. Der Stein bleibt dabei an den Sichtoberflächen erhalten, verhält sich in diesem Bereich jedoch wie die nicht gefährdeten, nur einseitig verklebten Stein-Glas-Elemente.

In Fällen, wo kein vorgespanntes Glas verwendet wurde, bietet es sich an, die mit Element-Übermaß erzeugten Kapillarschnitte durch Besäumung des Stein-Glas-Elementes mit einer Seitenkante des Elementendmaßes abschließen zu lassen. Hierdurch lässt sich eine optische Beeinträchtigung ganz vermeiden.

In der Regel beinhalten die betroffenen Stein-Glas-Elemente eine Abdeckung, die mittels einer Gießharzschicht mit der Steinplatte verbunden ist. Diese Gießharzschicht hat vorzugsweise die gleichen Bestandteile und Eigenschaften wie die Schicht, die zwischen Tragplatte und Steinplatte verwendet wird.

Während die Tragplatte vorwiegend aus Glas besteht, kann die Deckplatte durchaus auch aus anderem Material bestehen. Sehr häufig wird aber wegen der gewünschten Transluzenz eine weitere Glasplatte als Deckplatte bevorzugt. Gerade wegen der Transluzenz werden hier die durch Steinmaterial verdeckten Kapillarschnitte (schrägen Schnitte) vorgeschlagen, weil hier die geringste optische Beeinträchtigung verursacht wird. Bei Schnitten von beiden Oberflächen der Steinplatte aus kann auch eine Kombination von schrägen und senkrechten Schnitten ausgeführt werden um eine sichtbare Trennlinie im Kapillarschnitt zu vermeiden.

Wird hingegen keine Transluzenz gefordert - beispielsweise weil der Stein dazu nicht geeignet ist - kommen als Abdeckungen auch Metallplatten, durchaus auch in strukturierter Form vor. Aber auch Holzplatten und deren Derivate sind als Abdeckung denkbar.

Als Variante der Erfindung hat auch eine weitere Steinplatte als Abdeckung gewisse Vorzüge. Die witterungsbeständige Glasseite könnte nach außen gekehrt sein, während die natürliche Oberfläche der zweiten Steinplatte im Innenbereich bevorzugt wäre. Beispiele hierfür sind: Granit, Marmor, Alabaster, Schiefer, Kunststein. Im einfachsten Fall kann die Abdeckung auch nur aus einer Feuchtigkeit abweisenden Lack- oder Kunststoffschicht auf der der Tragplatte gegenüber liegenden Oberfläche der Steinplatte gebildet worden sein. Überwiegend handelt es sich hierbei um transparentes Material, das einen gewissen Schutz gegen Verschmutzung z.B. durch farbige Flüssigkeiten wie Rotwein usw. darstellt.

Vorzugsweise kann dies auch eine dünne Schicht sein, wie sie in der PCT WO 2006/079310 A1 als Diffusionssperre vorgeschlagen wird, um die Wanderung von Stoffen in das Material hinein oder aus dem Material heraus zu verhindern. Dazu gehören auch feuchte und flüssige Stoffe u.a. auch Wasser. Die möglichen und optimierenden Bestandteile einer solchen Schicht sind dort ausführlich beschrieben.

Auch alle möglichen Abdeckplatten können durchaus einseitig schon mit einer dünnen Abdeckschicht versehen sein, insbesondere die, welche Feuchtigkeit aufnehmen können. Der Kapillarschnitt kann dann auf die Abdeckplatte erweitert werden.

Ein besonders begehrtes räumliches Bauelement lässt sich herstellen, wenn das Verbundelement zunächst nur auf der Steinplattenseite eine Abdeckschicht hat. Man kann für diese Anwendung eine V-förmige Nut einseitig bis zur Abdeckschicht ausführen. Nach dem Einfüllen des Dichtstoffes, kann man eines der beiden, nur noch durch die Abdeckschicht verbundenen Teile hoch klappen und so winklige Bauteile erzeugen, wobei in der Kehle ein Feuchtigkeitseintritt durch den dort vorhandenen Kapillarschnitt verhindert wird. Für diese Anwendung kann ein beliebiger Abstand vom Rand angenommen werden. Durch wiederholte Anwendung dieses speziellen Kapillarschnittes lassen sich unterschiedliche räumliche Formen erzeugen, die immer in idealer Weise vor einer Feuchtigkeitsaufnahme geschützt sind.

Diese Elemente haben gute statische Eigenschaften, da eine durchgehende Schicht vorhanden ist. Die statischen Eigenschaften dieser Schicht lassen sich dabei durch viele Parameter einstellen, wie geometrische Schichtdicke, Härte, Reißfestigkeit und dem verwendeten Basismaterial.

Die Abdeckschicht kann durchaus auch schon die fertige Oberfläche des Endproduktes darstellen oder aber auch noch einem Feinschliff bzw. einem Poliervorgang unterzogen werden, wobei die Reflexionseigenschaft bestimmt wird. Die Schichtdicke wird dabei von 0,05 bis 2mm variieren und basiert auf Materialien wie Epoxide, Acrylate, Polyurethane Silikone oder ungesättigte Polyesterharze. Diese können thermisch und / oder optisch polymerisiert werden.

Unbedingt notwendige Zusätze sorgen dafür, dass die Elemente einen dauerhaften Verbund und ebenso eine langjährige optische Stabilität aufweisen. Es werden also Haftvermittler, UV-Absorber und Antioxidantien je nach Bedarf beigemischt.

Gleiches gilt auch für die Gießharze, die den Verbund, Trag- und Abdeckplatte /Stein und in weiteren Anwendungen Abdeckplatte / Abdeckschicht herstellen.

Wird eine weitere Deckplatte angebracht, ist die Abdeckschicht von geringerer Dicke und beträgt je nach Anwendung 1µm bis 500µm.

Eine Abdeckschicht dient im besonderen Maße auch als eindeutig definierte Unterlage für eine weitere Elementveredlungen, meistens mit dem Ziel, die Steinstrukturen ästhetisch zu ergänzen. Hier können Malereien, Grafiken, Reliefs oder auch Ornamenteinlagen (Stoffe, Metallgitter, Stäbe usw.) vorgesehen werden. Auch flächige Gießharzeinfärbungen und Vermischungen sind möglich.

Als Abdeckplatte wird dann bevorzugt Glas eingesetzt.

Aufwand und Kosten sparend kann der Kapillarschnitt vorgesehen werden, wenn der Kapillarschnitt mit dem gleichen Gießharz der großflächigen Verklebung ausgefüllt ist. Das könnte in einem einzigen Arbeitsgang erreicht werden. Bei optisch polymerisierenden Gießharzen würde man dann immer einen zweiseitigen Schnitt bevorzugen, weil die Gießharztiefe im Kapillarschnitt genügend gering gehalten werden kann.

Wenn eine Abdeckschicht aufgebracht wird, bietet es sich an, die Kapillarschnitte mit dem gleichen Gießharz der Abdeckschicht aufzufüllen. Man hat hier den Vorteil, dass der Kapillarschnitt noch nicht durch eine Platte abgedeckt ist und das blasenfreie Auffüllen des Kapillarschnittes noch manuell nachhelfend sichergestellt werden kann, was besonders bei dünn angelegten Kapillarschnitten notwendig sein kann.

Wenn jedoch der Kapillarschnitt zu tief für eine optisch gesteuerte Polymerisation ist, müssen im gesonderten Arbeitsgang vom Gießharz verschiedene Dichtstoffe verwendet werden, die jedoch einerseits mit dem Gießharz und der Steinplatte chemisch verträglich sein müssen und andererseits ähnliche optische Eigenschaften wie das Gießharz aufweisen sollten.

Bei extremen Feuchtigkeitsverhältnissen lässt sich durch weitere Maßnahmen die Diffusionsunterbrechung noch sicherer machen. So lassen sich im Kapillarschnitt Feuchtigkeit sperrende Materialien wie Glas-, Metall-, Kunststoff- Profile oder Streifen, oder Profil- bzw. Schlauchdichtungen einsetzen, bzw. verkleben. Dies ist in jedem Fall aber ein aufwendiger gesonderter Arbeitsgang.

Eine andere Variante, die Diffusionsabwehr zu erhöhen, besteht darin, dass mehrere parallel verlaufende Kapillarschnitte angebracht werden. Nachteilig ist, dass die zwar geringe optische Beeinträchtigung mehrfach auftritt.

Weitere Kapillarschnitte an weiteren Elementkanten sind möglich. Für waagerecht verlaufende Kanten sollte immer eine dichte Feuchtigkeitssperre aufgebaut werden. Gerade auf der unteren Seite des Elementes bilden sich in großer Zahl hängende Tropfen, die in den Kapillaren aufsteigen und mindestens eine optische Verdunklung des Steines verursachen.

Seitlich (senkrechte Montagerichtung) kann der Kapillarschnitt durchaus auch sinnvoll sein, auch ohne eingefüllte Dichtstoffe, also als Hohlraum, weil nur dann nur noch eine stark reduzierte Kapillarwirkung vorhanden ist und die entstehende Feuchtigkeit in der Regel seitlich schnell herunter läuft. So bleibt ein Druckausgleich des Verbund-Elementes zur Umgebung möglich. Zusätzlich kann man den seitlichen Steg auch noch Feuchtigkeit abweisend imprägnieren.

Sollen jedoch alle Kanten eines Elementes mit ausgefüllten und dichten Kapillarschnitten versehen werden, wird vorgeschlagen in den Kapillarschnitt ein zusätzliches Funktionsprofil einzusetzen, welches zur Steinkante hin porös oder ganz offen ist. Es kann sich auch um ein Hohlprofil handeln. Ober einfache Funktionselemente, wie Ventile, Hohlnadeln usw. lässt sich dann ein Druckausgleich gewährleisten.

Es lassen sich aber auch in einer solchen Anordnung Miniaturmessgeräte z.B. für Druck, Temperatur und Feuchtigkeit, usw. unterbringen.

Über einfache Ventile kann man z.B. einen Unterdruck auf die Schnittkanten des Natursteines aufbringen. Hiermit lässt sich einerseits die Dichtheit des Kapillarschnittes überprüfen, anderseits kann es aber auch nützlich sein, einen dauerhaften Unterdruck anzulegen um die Kapillaren der Steinplatte teilweise zu evakuieren.

Dichtmaterial, eingesetzte Sperren, Funktionsprofile und Funktionselemente können in beliebig vielen Kombinationen ausgeführt werden. Weitere Vorteile der Erfindung ergeben sich aus der Beschreibung und den Zeichnungen. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen jeweils in einer geschnittenen Explosionsdarstellung:
- Fig. 1: einen vollständigen senkrechten Kapillarschnitt, der den Stein auftrennt;
- Fig. 2: einen vollständigen schrägen Kapillarschnitt, der den Stein auftrennt;
- Fig. 3: einen unvollständigen Kapillarschnitt, bei dem die Sichtfläche erhalten bleibt;
- Fig.4: einen unvollständigen Kapillarschnitt, bei dem einen mittigen Steinsteg entsteht;
- Fig. 5: einen vollständigen beidseitigen schrägen Kapillarschnitt;
- Fig. 6: einen vollständigen senkrechten beidseitigen Kapillarschnitt;
- Fig. 7: einen vollständigen gefrästen beidseitigen Kapillarschnitt in V-Form;
- Fig. 8: einen vollständigen gefrästen beidseitigen Kapillarschnitte in runder Form;
- Fig. 9: einen vollständigen senkrechten Kapillarschnitt wobei ein Diffusionssperrenprofil eingesetzt ist.
- Fig. 10: einen vollständigen senkrechten Kapillarschnitt mit eingesetzter Schlauchdichtung; und
- Fig. 11: zwei vollständige senkrechte Kapillarschnitte.
- Fig. 12: ein mit der Steinplatte verbundenes Funktionsprofil
- Fig. 13: Vorbereitung mit einer symmetrischen V- Nut für die Herstellung eines winkligen Elementes mit Kapillarschnitt.
- Fig. 14: Fertiges winkliges Element ohne Abdeckplatte
- Fig. 15: Fertiges winkliges Element mit einer Abdeckplatte z.B. Glas

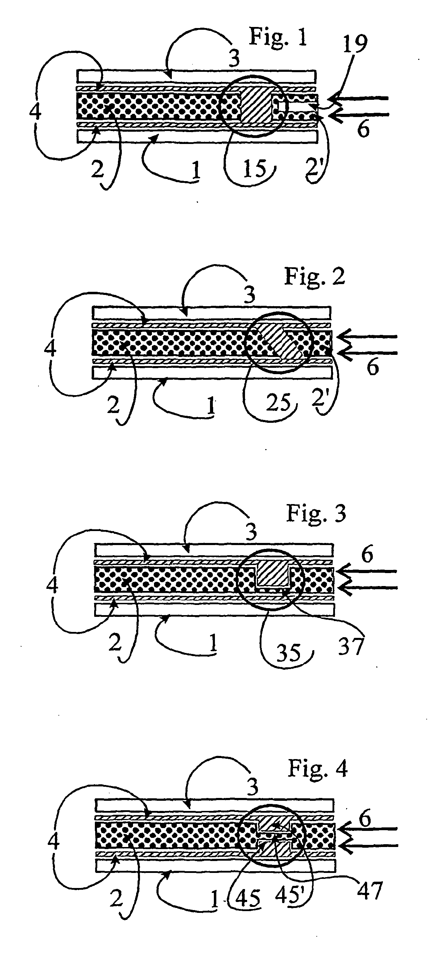

Die Schnittzeichnungen der **Figuren 1 bis 11** zeigen jeweils den gleichen prinzipiellen Aufbau eines Stein-Glas-Elementes mit mindestens einer Steinplatte **2** und einer Tragplatte **1,** die mindestens eine Glasscheibe umfasst, welche mittels einer transparenten oder opaken Gießharzschicht **4** großflächig mit der Steinplatte 2 verbunden ist, wobei die der Tragplatte 1 gegenüberliegende Oberfläche der Steinplatte 2 mit einer Feuchtigkeit abweisenden Abdeckung **3** in Form einer Schicht oder einer weiteren Platte versehen ist. Der jeweils mit einem Kreis bzw. einer Ellipse hervorgehobene Bereich stellt den unterschiedlich ausgeführten Kapillarschnitt **5** der Figuren 1 bis 11 dar. Die Feuchtigkeitsdiffusion **6** greift an der offenliegenden Schnittfläche des Steines an.

**Fig.1** zeigt einen vollständigen senkrechten Kapillarschnitt **15,** der den Stein auftrennt. Repräsentativ auch für die übrigen Figuren 2 bis 11 ist im hier waagerecht dargestellten Schnitt **19** gezeigt, wie die Wasseraufnahme im durch den Kapillarschnitt 15 entstandenen Randstreifen weiter reduziert und gleichzeitig die offene Abgabefläche vergrößert wird, wobei aber die Sichtfläche des Steinstreifens erhalten bleibt.

**Fig.2** zeigt einen vollständigen schrägen Kapillarschnitt **25,** der den Stein auftrennt. Vorteilhaft ist hier die mögliche optische Überlappung des Steinmaterials, der den Kapillarschnitt kaum wahrnehmbar werden lässt.

**Fig.3** zeigt einen unvollständigen Kapillarschnitt als Profilnut, wobei ein Nutenboden **35** entsteht. Die Sichtfläche des Steines zur gläsernen Tragplatte 1 bleibt dabei über einen stehengelassenen Steinsteg **37** erhalten.

**Fig.4** zeigt einen unvollständigen Kapillarschnitt, wobei ein mittiger Steinsteg **47** entsteht, mit den beiden Nutenböden **45** und **45'.**

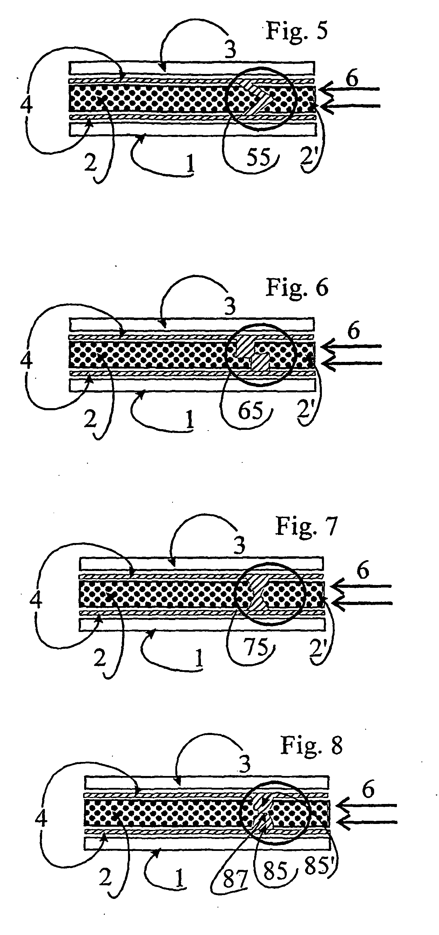

**Fig.5** zeigt einen vollständigen schrägen Kapillarschnitt **55,** der von der Gegenseite her entgegengesetzt schräg ausgeführt ist und damit unter allen Blickwinkeln keine sichtbare Trennlinie aufweist.

**Fig.6** zeigt einen vollständigen senkrechten Kapillarschnitt **65,** der von der Gegenseite her versetzt ausgeführt ist und damit die sichtbare Trennlinie minimal halten kann.

**Fig.7** zeigt einen vollständigen gefrästen Kapillarschnitt in V-Form **75,** der auch von der Gegenseite her ausgeführt ist und damit die sichtbare Trennlinie minimal halten kann.

**Fig.8** zeigt einen vollständigen gefrästen Kapillarschnitt in runder Form, der auch von der Gegenseite her ausgeführt ist, wobei zwei Nutenböden **85, 85'** entstehen und ein schmaler Steg **87** erzeugt wird.

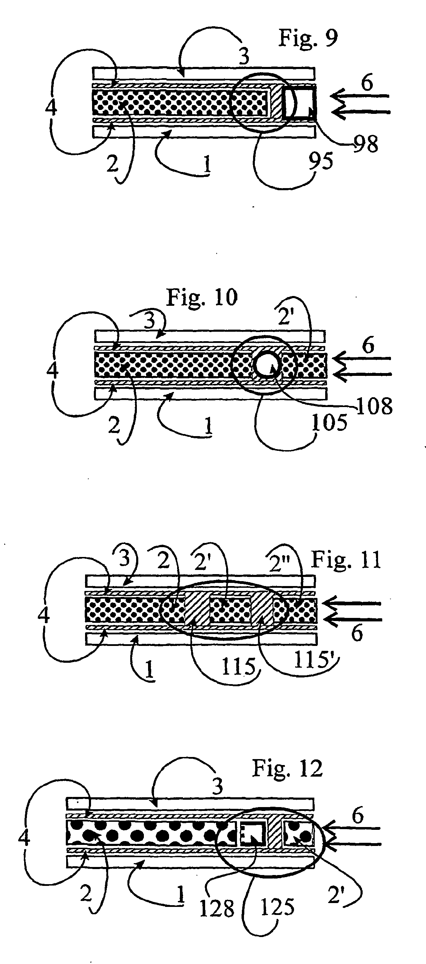

**Fig.9** zeigt einen vollständigen senkrechten Kapillarschnitt **95,** wobei ein Diffusionssperrenprofil **98** eingesetzt ist und damit die Diffusion vollständig und sicher unterbindet. Ein solches Profil kann auch, wie hier skizziert den Elementrand bilden.

**Fig.10** zeigt einen vollständigen senkrechten Kapillarschnitt **105** mit eingesetzter Schlauchdichtung **108** die eine Diffusion unterbindet.

**Fig.11** zeigt zwei vollständige senkrechte Kapillarschnitte **115, 115',** die eine zusätzlich sichere Diffusionssperre darstellen.

**Fig. 12** zeigt ein mit der Steinplatte verbundenes Funktionsprofil **128.**

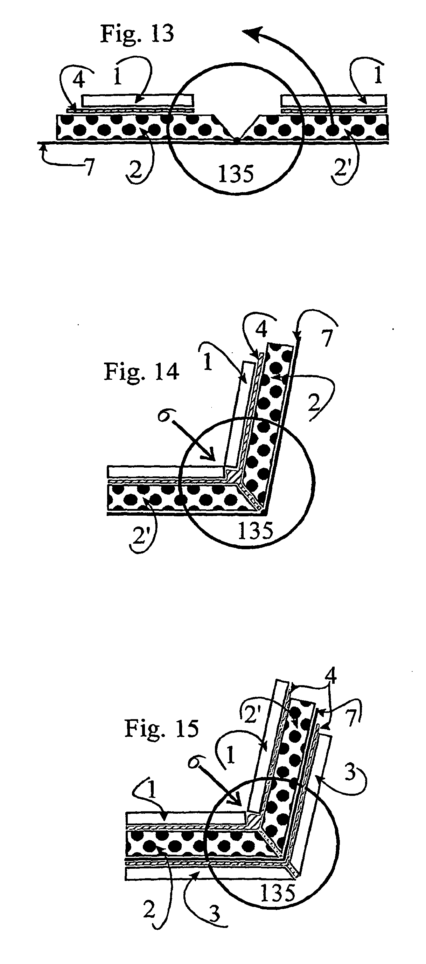

**Fig. 13** zeigt eine spezielle V-förmige Nut **205,** die bis zur Abdeckschicht **7** reicht, diese jedoch nicht durchtrennt. Dabei entsteht - durch Hochklappen eines der nur noch durch die Abdeckschicht verbundenen Teile 2 oder 2' ein winkliges Bauteil.

**Fig. 14** zeigt ein fertiges winkliges Bauteil, wobei die Abdeckschicht 7 gleichzeitig die fertige Fläche des Endproduktes ist.

**Fig. 15** zeigt schließlich ein fertiges winkliges Bauteil, wobei die Abdeckschicht 7 mit einer weiteren Deckplatte 3, - hier eine Glasplatte -, mittels Gießharz 4 verbunden ist.

## Patentansprüche

1. Stein-Glas-Element mit mindestens einer Steinplatte (2) und einer Tragplatte (1), die mindestens eine Glasscheibe umfasst, welche mittels einer transparenten oder opaken Gießharzschicht (4) großflächig mit der Steinplatte (2) verbunden ist, wobei die derTragplatte (1) gegenüberliegende Oberfläche der Steinplatte (2) mit einer Feuchtigkeit abweisenden Abdeckschicht (7) und/oder einer Abdeckplatte (3) versehen ist,
**dadurch gekennzeichnet,**
**dass** die Steinplatte (2) parallel zu mindestens einer Seitenkante einen Kapillarschnitt (15; 25; 35; 45, 45'; 55; 65; 75; 85, 85'; 95; 105; 115, 115',125, 135) aufweist, der mit einem Dichtstoff ausgefüllt ist, welcher eine Feuchtigkeitsdiffusion (6) in Richtung auf das Innere der Steinplatte (2) verhindert.

2. Stein-Glas-Element nach Anspruch 1 **dadurch gekennzeichnet, dass** die Steinplatte (2) aus verschiedenen Steinplattenelementen zusammengesetzt ist.

3. Stein-Glas-Element nach Anspruch 1 oder 2 **dadurch gekennzeichnet, dass** der Kapillarschnitt (15; 35; 45, 45'; 65; 95; 105; 115, 115', 125, 135) senkrecht oder schräg zur Oberfläche der Steinplatte (2) ausgeführt ist.

4. Stein-Glas-Element nach einem der vorhergehenden Ansprüche, **dadurch gekennzeichnet, dass** der Kapillarschnitt (15, 25, 55, 65, 75, 95, 105, 115, 115',125, 135) die Steinplatte vollständig in zwei Plattenabschnitte (2, 2') durchtrennt.

5. Stein-Glas-Element nach Anspruch 4, **dadurch gekennzeichnet, dass** zwischen den beiden Plattenabschnitten (2, 2') an der Kante der Steinplatte (2) anliegend, ein zumindest in Richtung der Steinplatte (2) poröses oder offenes Material oder Funktionsprofil (128) vorhanden ist, woran sich der Kapillarschnitt (125) anschließt.

6. Stein-Glas-Element nach einem der Ansprüche 1 bis 3, **dadurch gekennzeichnet, dass** der Kapillarschnitt (15, 25, 55, 65, 75, 95, 105, 115, 115', 125, 135) als Stoßfuge zwischen der Steinplatte (2) und einem feuchtigkeitssperrenden Material (98,108,128) eingesetzt ist.

7. Stein-Glas-Element nach einem der Ansprüche 1 bis 6, **dadurch gekennzeichnet, dass** der Kapillarschnitt durch Besäumung des Stein-Glas-Elementes mit einer Seitenkante des Elementes abschließt.

8. Stein-Glas-Element nach einem der vorhergehenden Ansprüche, **dadurch gekennzeichnet, dass** die Abdeckschicht (7) auf der Basis von Epoxiden, Acrylaten, Polyurethanen Silikonen oder ungesättigten Polyesterharzen aufgebaut ist.

9. Stein-Glas-Element nach Anspruch 8, **dadurch gekennzeichnet, dass** die Abdeckschicht (7) durch getrennt aufgetragene Malerei oder Grafik, bereichsweisen Einfärbungen und/oder deren Vermischungen durch Farbzusätze und/oder Oberflächenstrukturen und/oder Ornamenteinlagen gestaltet ist.

10. Stein-Glas-Element nach einem der vorhergehenden Ansprüche, **dadurch gekennzeichnet, dass** sowohl eine Abdeckplatte (3) als auch eine Abdeckschicht (7) auf der Basis von Epoxiden, Acrylaten, Polyurethanen Silikonen oder ungesättigten Polyesterharzen vorhanden sind.

11. Stein-Glas-Element nach einem der Ansprüche 8 bis 10, **dadurch gekennzeichnet, dass** in der Abdeckschicht (7) und/oder in der Gießharzschicht (4) Haftvermittler auf der Basis von einem oder mehreren Silanen und/oder Titanaten und/oder Aluminaten homogen verteilt vorhanden sind.

12. Stein-Glas-Element nach einem der Ansprüche 8 bis 11, **dadurch gekennzeichnet, dass** in der Abdeckschicht (7) und/oder in der Gießharzschicht (4) weitere Substanzen homogen verteilt vorhanden sind, welche die Strahlung im Wellenlängenbereich des ultravioletten (UV) Lichtes absorbieren.

13. Stein-Glas-Element nach einem der Ansprüche 8 bis 12, **dadurch gekennzeichnet, dass** in der Abdeckschicht (7) und/oder in der Gießharzschicht (4) weitere Substanzen homogen verteilt vorhanden sind, die die durch chemische Oxidation entstandenen Radikalstrukturen deaktivieren.

14. Stein-Glas-Element nach einem der vorhergehenden Ansprüche, **dadurch gekennzeichnet, dass** im Kapillarschnitt (95; 105) Feuchtigkeit sperrende Materialien wie Profile oder Streifen aus Glas-, Metall-, Kunststoff (98), oder Profil- bzw. Schlauchdichtungen (108) eingesetzt, bzw. verklebt sind.

15. Stein-Glas-Element nach einem der vorhergehenden Ansprüche, **dadurch gekennzeichnet, dass** der Kapillarschnitt (135) einseitig V-förmig ausgeführt ist, und dass die nur noch durch die Abdeckschicht (7) verbundenen Plattenabschnitte (2, 2') winklig zueinander ausgerichtet sind und **dadurch** eine räumliche Form bilden.

## Claims

1. A stone-glass element having at least one stone plate (2) and a supporting plate (1), comprising at least one glass pane which is bonded "large area" to said stone plate (2) by means of a transparent or opaque cast resin layer (4), with the surface of the stone plate (2) opposite of the supporting plate (1) being provided with a moisture-repellant cover layer (7) and/or a cover plate (3),
**characterized in that**
the stone plate (2) comprises a capillary cut (15; 25; 35; 45, 45'; 55; 65; 75; 85, 85'; 95; 105; 115, 115',125, 135) in parallel to at least one side edge being filled with a sealing compound which prevents a moisture diffusion (6) towards the stone plate's (2) interior.

2. The stone-glass element according to claim 1, **characterized in that** the stone plate (2) is composed of various stone plate elements.

3. The stone-glass element according to claim 1 or 2, **characterized in that** the capillary cut (15; 35; 45, 45'; 65; 95; 105; 115, 115', 125, 135) is made in a perpendicular or in a transversal configuration to the surface of the stone plate (2).

4. The stone-glass element according to any one of the preceding claims, **characterized in that** the stone plate is completely severed into two plate sections (2, 2') by the capillary cut (15, 25, 55, 65, 75, 95, 105, 115, 115',125, 135).

5. The stone-glass element according to claim 4, **characterized in that** between the two plate sections (2, 2') a porous or open material or functional profile (128) is provided abutting the edge of the stone plate (2) at least towards the stone plate (2) which is joined by the capillary cut (125).

6. The stone-glass element according to any one of claims 1 to 3, **characterized in that** the capillary cut (15, 25, 55, 65, 75, 95, 105, 115, 115', 125, 135) is used as a butt joint between the stone plate (2) and a moisture barrier material (98, 108, 128).

7. The stone-glass element according to any one of claims 1 to 6, **characterized in that** the capillary cut terminates by edging the stone-glass element with a side edge of the element.

8. The stone-glass element according to any one of the preceding claims, **characterized in that** the cover layer (7) is composed based on epoxy resins, acrylates, polyurethanes, silicones or unsaturated polyester resins.

9. The stone-glass element according to claim 8, **characterized in that** the cover layer (7) is embellished by paintings or graphic art which have been applied separately, pigmentation of specific areas and/or mixtures thereof by adding colours and/or surface structures and/or ornamental inlays.

10. The stone-glass element according to any one of the preceding claims, **characterized in that** both a cover plate (3) and a cover layer (7) on the basis of epoxy resins, acrylates, polyurethanes, silicones or unsaturated polyester resins are present.

11. The stone-glass element according to any one of claims 8 to 10, **characterized in that** in the cover layer (7) and/or in the cast resin layer (4) primers on the basis of one or plural silanes and /or titanates and/or aluminates are present homogeneously distributed.

12. The stone-glass element according to any one of claims 8 to 11, **characterized in that** in the cover layer (7) and/or in the cast resin layer (4) further substances are present homogeneously distributed absorbing the radiation in the wavelength range of ultraviolet (UV) light.

13. The stone-glass element according to any one of claims 8 to 12, **characterized in that** in the cover layer (7) and/or in the cast resin layer (4) further substances are present homogeneously distributed deactivating the radical structures caused by chemical oxidation.

14. The stone-glass element according to any one of the preceding claims, **characterized in that** in the capillary cut (95; 105) materials forming a moisture barrier such as glass, metal, plastic (98) gaskets or strips, or profiled or hose-shaped sealings (108) are inserted or adhesively bonded, respectively.

15. The stone-glass element according to any one of the preceding claims, **characterized in that** the capillary cut (135) is made in a unilaterally V-shaped configuration, and that the plate sections (2, 2') only bonded yet by the covering layer (7) are aligned in an angular configuration to each other and thus form a spatial shape.

## Revendications

1. Elément en pierre et verre comprenant au moins une plaque de pierre (2) et une plaque de support (1) englobant au moins une vitre de verre, qui est reliée à la plaque de pierre (2) sur une grande surface au moyen d'une couche de résine de coulée (4) transparente ou opaque, la surface de la plaque de pierre (2) opposée à celle où se trouve la plaque de support (1) étant munie d'une couche de recouvrement (7) et/ou d'une plaque de recouvrement (3), qui sont hydrofuges,
**caractérisé en ce que** la plaque de pierre (2) présente, parallèlement à au moins un bord latéral, une entaille capillaire (15 ; 25 ; 35 ; 45, 45' ; 55 ; 65 ; 75 ; 85, 85' ; 95 ; 105 ; 115, 115', 125, 135), qui est remplie ou comblée par un substance d'étanchéité empêchant une diffusion d'humidité (6) en direction de l'intérieur de la plaque de pierre (2).

2. Elément en pierre et verre selon la revendication 1, **caractérisé en ce que** la plaque de pierre (2) est formée par l'assemblage de différents éléments de plaque de pierre.

3. Elément en pierre et verre selon la revendication 1 ou la revendication 2, **caractérisé en ce que** l'entaille capillaire (15 ; 35 ; 45, 45' ; 65 ; 95 ; 105 ; 115, 115', 125, 135) est réalisée perpendiculairement ou de manière oblique par rapport à la surface de la plaque de pierre (2).

4. Elément en pierre et verre selon l'une des revendications précédentes, **caractérisé en ce que** l'entaille capillaire (15, 25, 55, 65, 75, 95, 105, 115, 115', 125, 135) sectionne totalement la plaque de pierre en deux tronçons de plaque (2, 2').

5. Elément en pierre et verre selon la revendication 4, **caractérisé en ce qu'**entre les deux tronçons de plaque (2, 2'), en appui contre le bord de la plaque de pierre (2), se trouve un matériau ou un profilé fonctionnel (128) ouvert ou poreux au moins en direction de la plaque de pierre (2), et auquel se raccorde l'entaille capillaire (125).

6. Elément en pierre et verre selon l'une des revendications 1 à 3, **caractérisé en ce que** l'entaille capillaire (15, 25, 55, 65, 75, 95, 105, 115, 115', 125, 135) est mise en oeuvre en tant que joint intermédiaire de bout entre la plaque de pierre (2) et un matériau formant barrière à l'humidité (98, 108, 128).

7. Elément en pierre et verre selon l'une des revendications 1 à 6, **caractérisé en ce que** l'entaille capillaire arrive au ras d'un bord latéral de l'élément, par arasement de l'élément en pierre et verre.

8. Elément en pierre et verre selon l'une des revendications précédentes, **caractérisé en ce que** la couche de recouvrement (7) est réalisée à base d'époxydes, d'acrylates, de polyuréthannes, de silicones ou de résines polyester insaturées.

9. Elément en pierre et verre selon la revendication 8, **caractérisé en ce que** la couche de recouvrement (7) est réalisée par des peintures ou des graphismes appliqués de manière séparée, des colorations sectorielles et/ou leurs combinaisons, par des additifs colorés et/ou des structures de surface et/ou des inserts d'ornements.

10. Elément en pierre et verre selon l'une des revendications précédentes, **caractérisé en ce qu'**il existe aussi bien une plaque de recouvrement (3) qu'une couche de recouvrement (7) à base d'époxydes, d'acrylates, de polyuréthannes, de silicones ou de résines polyester insaturées.

11. Elément en pierre et verre selon l'une des revendications 8 à 10, **caractérisé en ce que** dans 1a couche de recouvrement (7) et/ou dans 1a couche de résine de coulée (4) se trouvent, répartis de manière homogène, des agents adhésifs ou de pontage à base d'un ou de plusieurs silanes et/ou titanates et/ou aluminates.

12. Elément en pierre et verre selon l'une des revendications 8 à 11, **caractérisé en ce que** dans 1a couche de recouvrement (7) et/ou dans 1a couche de résine de coulée (4) se trouvent, réparties de manière homogène, d'autres substances qui absorbent le rayonnement dans le domaine de longueur d'ondes de la lumière ultraviolette (UV).

13. Elément en pierre et verre selon l'une des revendications 8 à 12, **caractérisé en ce que** dans la couche de recouvrement (7) et/ou dans la couche de résine de coulée (4) se trouvent, réparties de manière homogène, d'autres substances qui désactivent des structures de radicaux produites par oxydation chimique.

14. Elément en pierre et verre selon l'une des revendications précédentes, **caractérisé en ce que** dans l'entaille capillaire (95 ; 105) sont insérés ou collés des matériaux formant barrière à l'humidité, comme des profilés ou des bandes en verre, métal, matière plastique (98), ou des joints d'étanchéité profilés ou en forme de boudin (108).

15. Elément en pierre et verre selon l'une des revendications précédentes, **caractérisé en ce que** l'entaille capillaire (135) est réalisée en forme de V d'un côté, et **en ce que** les tronçons de plaque (2, 2') qui ne sont plus reliés que par la couche de recouvrement (7), sont orientés angulairement l'un par rapport à l'autre et réalisent ainsi une forme spatiale.
